# EUROPEAN PATENT SPECIFICATION

(11) **EP 2 156 224 B1**
(45) Date of publication and mention of the grant of the patent: **12.10.2011**
(21) Application number: 08736996.3
(22) Date of filing: 16.04.2008
(51) Int. Cl.: G02B 6/38

(54) **SURFACE EGRESS AND/OR INGRESS HOUSING**
OBERFLÄCHENAUSGANGS- UND/ODER EINGANGSGEHÄUSE
BOÎTIER DE SORTIE ET/OU D'ENTRÉE DE SURFACE

(30) Priority: 19.04.2007 GB 0707621
(43) Date of publication of application: 24.02.2010
(73) Proprietor: GKN Aerospace Services Limited, Isle of Wight, PO32 6RA (GB)
(72) Inventor: SAUNDERS, Paul, Vincent, Isle of Wight PO32 6NZ (GB)
(74) Representative: Albutt, Anthony John
(86) International application number: PCT/GB2008/001334
(87) International publication number: WO 2008/129247

(56) References cited:
- WO-A-2005/103786
- GB-A- 2 274 178
- US-A- 4 537 469
- US-A- 5 604 836
- US-A1- 2005 286 834
- KANG H K ET AL: "DEVELOPMENT OF FIBRE OPTIC INGRESS/EGRESS METHODS FOR SMART COMPOSITE STRUCTURES" SMART MATERIALS AND STRUCTURES, IOP PUBLISHING LTD., BRISTOL, GB, vol. 9, no. 2, 1 April 2000 (2000-04-01), pages 149-156, XP000920147 ISSN: 0964-1726

## Description

### BACKGROUND

The present invention relates to surface egress and/or ingress housing for use with a cable, for example a fibre optic cable.

WO 2005/103786 describes a waveguide assembly that includes a waveguide on a substrate, a waveguide housing and an embedding layer embedding at least part of the waveguide housing. The waveguide housing comprises a waveguide channel for guiding a waveguide from the substrate through the embedding layer. The waveguide can be a fibre optic cable. The waveguide assembly is a complex and expensive and requires very accurate placement of the connector to avoid damaging the waveguide.

### SUMMARY

An aspect of the invention provides a surface egress and/or ingress housing for an elongate flexible member. The housing includes a body having a first surface, with a first opening for receiving a connector for the elongate flexible member, and a base to be at least partially received under an embedding layer for mounting the housing on the surface. The base includes a second opening that is wider than the elongate flexible member and the body further includes an internal cavity in communication with the first opening and the second opening and being wider than the elongate flexible member.

Providing a second opening and an internal cavity that are wider than the elongate flexible member can enable lateral movement of the housing during the locating of the housing on the surface, and can thereby facilitate the locating and mounting of the housing on the surface.

An embodiment of the invention can provide a structure with at least one such housing, a substrate having a surface on which the housing is mounted, a connector for an elongate flexible member mounted to the housing and an elongate flexible member that is attached to the connector and passes through the housing and into the substrate.

An embodiment of the invention can provide a method of supporting an end of an elongate member that is embedded in a substrate. The method can include passing the elongate flexible member though the first and second openings of a such a housing, locating the housing on the surface of the substrate, mounting a connector attached to the end of the elongate flexible member at the first opening of the housing, and at least partially embedding the base of the housing under an embedding layer. By providing a second opening wider than the elongate flexible member with an internal cavity wider than the elongate flexible member lateral movement of the housing during the locating of the housing on the surface of the substrate and during the embedding of the base of the housing is possible, facilitate the locating and mounting of the housing on the surface.

Although various aspects of the invention are set out in the accompanying independent claims, other aspects of the invention include any combination of features from the described embodiments and/or the accompanying dependent claims with the features of the independent claims, and not solely the combinations explicitly set out in the accompanying claims.

### BRIEF DESCRIPTION OF THE DRAWINGS

Embodiments of the invention are described, by way of example only, with reference to the accompanying drawings.
Figure 1 is schematic perspective view of a front of an example of a housing;
Figure 2 is a schematic perspective view of a rear of the housing of Figure 1;
Figure 3 is a schematic front view of an assembly comprising an example of the housing of Figure 1 mounted on a surface of a substrate;
Figure 4 is a schematic cross-section of the assembly of Figure 3;
Figure 5 is a schematic rear view of the assembly of Figure 3;
Figure 6 is a schematic cross-section of an assembly comprising another example of a housing;
Figure 7 is a schematic representation of an example of a structure that includes two housings.

While the invention is susceptible to various modifications and alternative forms, specific embodiments are shown by way of example in the drawings and are herein described in detail. It should be understood, however, that drawings and detailed description thereto are not intended to limit the invention to the particular form disclosed, but on the contrary, the invention is to cover all modifications, equivalents and alternatives falling within the scope of the claimed invention.

### DETAILED DESCRIPTION

Embodiments of the invention are described that enable the supporting of an end of an elongate flexible member that is embedded in a substrate. The substrate can, for example, be a composite material in which an elongate flexible member such as an optical fibre is located to performing monitoring functions, for example for monitoring temperature and/or strain within the composite material. The housing can thus provide a support for the end of the elongate flexible member and a connector for the elongate flexible member.

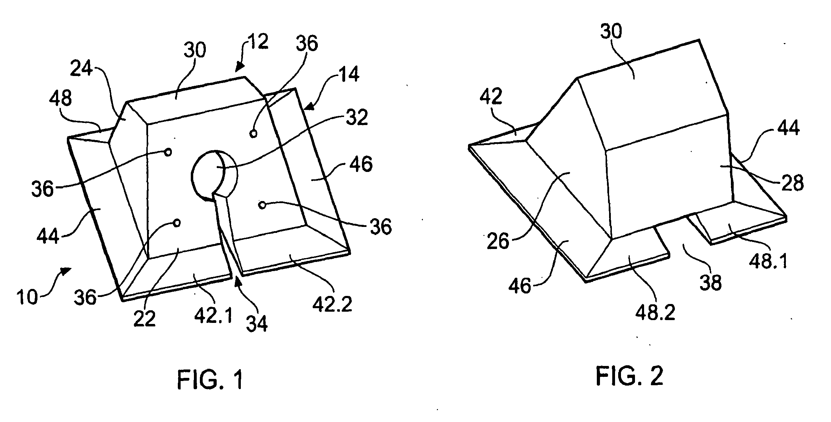

Figure 1 is perspective view of a front of an example of a housing 10 that can support the end of an elongate flexible member (e.g., an optical fibre or other waveguide) that emerges from and/or enters into a substrate. Figure 2 is a perspective view of the rear of the housing of Figure 1.

As shown in Figures 1 and 2, the housing 10 comprises a body 12 and a base 14. In this example the body 12 and the base 14 are integral to each other.

The body 12 in the example of a housing 10 shown in Figures 1 and 2 has a first face 22 that forms a front surface. A second face 24 is adjacent to the first face and forms a first side surface. A third face 26 is adjacent to the other side of the first face 22 and forms a second side surface. A fourth face 28 is adjacent to the second and third faces 24 and 26 and forms a rear surface. A fifth face 30 forms a top surface and is adjacent to each of the first; second, third and fourth faces.

In the example shown in Figures 1 and 2, the base 14 comprises a flange-like member that extends away from the body. The base can have a substantially flat lower surface for mounting on the surface of substrate, but it could also be provided with a profile, for example to facilitate locating and/or mounting the housing on the surface of the substrate. In the illustrated example, the base 14 includes a first portion 42 adjacent to the first face 22 of the body, a second portion 44 adjacent to the second face 24 of the body, a third portion 46 adjacent to the third face 26 of the body, and a fourth portion 48 adjacent the fourth face 28 of the body. In the particular example illustrated in Figures 1 and 2, it will be noted that the first portion 42 of the base is split into two sub-portions 42.1 and 42.2 by a slot 34, the purpose of which is described later. Similarly, it will be noted that the fourth portion 44 of the base is split into two sub-portions 48.1 and 48.2 by an opening 38, the function of which is described later.

The front face 22 of the body 12 is provided with a first (or front) opening 32. This opening 32 in the first surface 22 leads to an internal cavity in the body and is configured to receive a connector for the elongate flexible member as will be explained later. In the example of a housing 10 illustrated in Figures 1 and 2, the front face 22 is formed with formations (e.g., threaded holes) for receiving fixings (e.g., screws) for mounting the connector on the housing as will be explained later. The slot 34 extends from a lower edge of the opening 32 to the bottom of the base 14 for receiving the flexible member when the housing is being installed as will be described in more detail later.

The rear of the base 14 of the housing 10 is provided with a second (or rear) opening 38 that is configured to allow the elongate flexible member to pass from the connector via the internal cavity in the body and into the substrate. As will be described later, the second opening and the cavity are configured to have a width substantially greater than the width of the elongate flexible member to enable lateral movement of the housing during assembly without trapping or damaging the elongate flexible member. This will become clear in the following description.

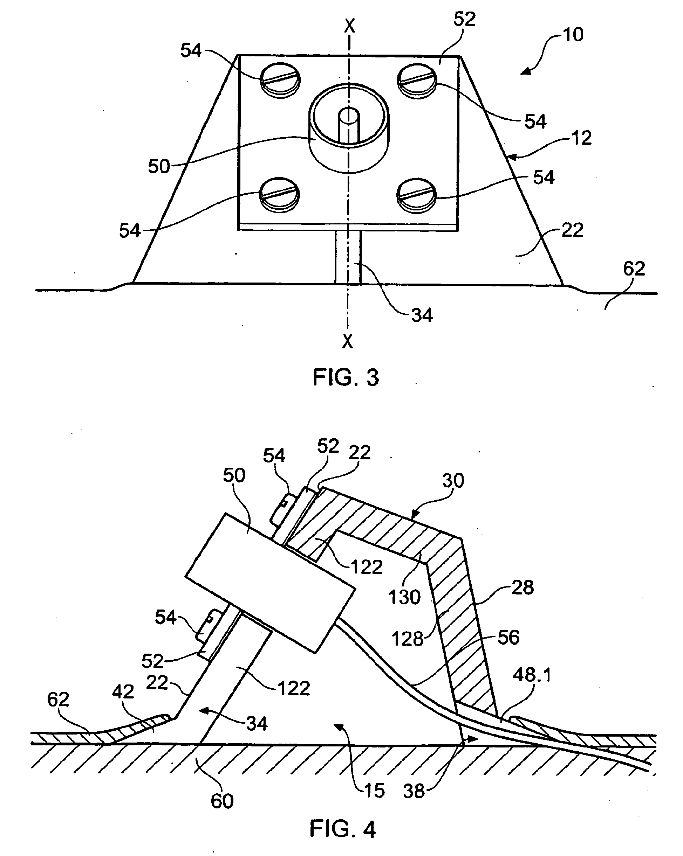

Figure 3 is a schematic front view of a housing of Figure 4 mounted on a substrate and with a connector 50 for the elongate flexible member mounted on the front face 22 of the housing 10. In the present example, the elongate flexible member is an optical fibre and the connector is a standard optical fibre connector. The opening 32 can be configured (e.g. by being machined) to a shape that will accept any shape of connector.

In the example shown in Figure 3, the optical connector 50 is screwed to the front face 22 of the body 12 using screws 54 that can be received in the threaded holes 36 in the front face 22 of the body 12. The screws pass through holes (not shown) in a flange 52 that forms part of the connector 50. In the configuration shown in Figure 3, the flange 54 overlies part of the slot 34. In another configuration, it might cover the whole or a smaller part of the slot 34.

As will be described later, in other embodiments the connector could take another form and could be mounted on the housing in another way. For example, in one example embodiment, the connector may or may not have a flange and can be bonded to the housing.

Figure 3 also illustrates that an embedding layer 62 overlies the flange-like base 14 of the housing 10 to mount the housing on the substrate surface.

Figure 4 is a cross-section taken along the line X - X in Figure 3, which extends generally vertically through the middle of the front face 22 of the housing, but passes around the body of the connector 50.

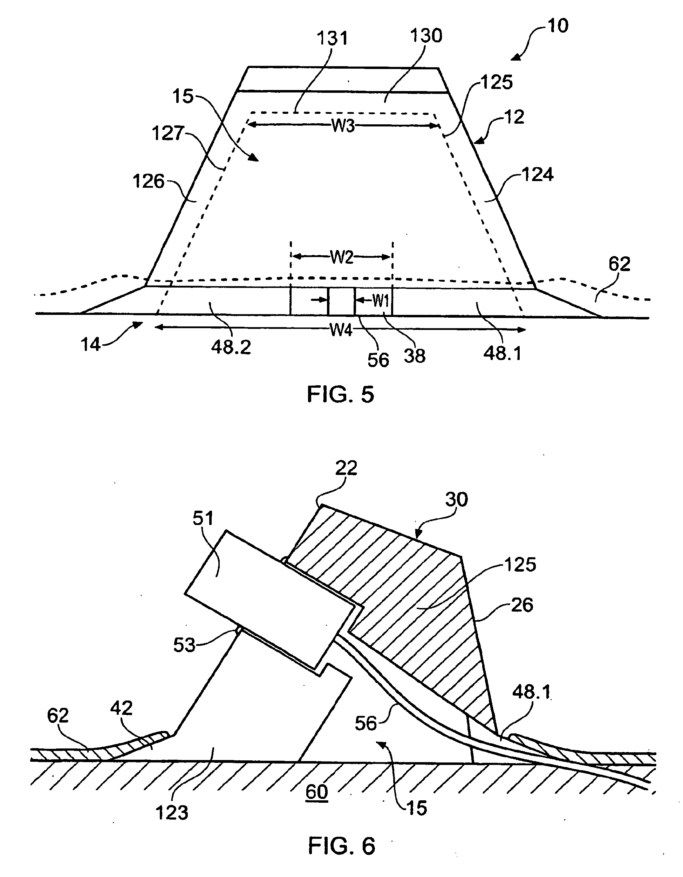

Figure 4 shows that the body of the housing is formed from walls that define the faces of the housing. A front wall 122 defines the front surface 22. The cross-section of Figure 4 passes through the slot 34 in the front wall 122 below the connector 50, which is the reason that the front wall is shown in cross-section above the connector 50 and the front wall and the first (the front) portion 42 of the base 14 are not shown in cross-section below the connector 50. An upper wall 130 defines the fifth surface 30. A rear wall 128 defines the fourth surface 28. Similarly first and second side walls (not shown in Figure 4, but see Figure 5 later) define the second and third surfaces 24 and 26. The cross-section of Figure 4 also passes through the second opening 38 formed in the fourth portion 48 of the base 14, which is why the bottom of the rear wall 128 and the fourth (rear) portion 48 of the base 14 are not shown in cross-section.

Figure 4 also shows how the walls of the body portion form a cavity 15 that is open to the bottom of the housing and extends across the width of the housing between the side walls. Figure 4 illustrates that the elongate flexible member 56 can extend from the rear of the connector 50 in a free manner and can pass though the second opening 38 under the embedding layer 62 and into the substrate 60. The width of the cavity and the rear opening 38 are such that they do not constrain or guide the elongate flexible member 56, but rather than this is greater than the width (e.g., the diameter) of the elongate flexible member, so that the lateral positioning of the housing with respect to the entry/exit point of the elongate flexible member with respect to the substrate is not critical. In use, once the housing has been mounted, the cavity 15 can be filled with resin (or another filling material) so that the elongate flexible member 56 can be held firmly in position.

Figure 5 is a schematic rear view of the housing 10 mounted on the substrate 60. In Figure 5, the position of the upper surface of the embedding layer 62 is illustrated by a dotted line. This is to illustrate that the width W1 of the elongate flexible member 56 is less, indeed substantially less, than the width W2 of the second opening and the width (which varies from W3 to W4) of the cavity 15 in the housing. As Figure 5 is an external view, the inner edges 125 and 127 of the first and second side walls 124 and 126 and the inner edge 131 of the upper wall 130 are represented by dashed lines, the cavity 15 being defined within the dashed lines.

Figure 5 also illustrates that in this example the rear portion 48 of the base 14 is slit into two parts 48.1 and 48.2 by the second opening 38. In the examples shown in the Figures, the rear opening extends up to the bottom of the rear wall 128 of the body 12. It should be appreciated that in other examples, the second opening may only extend part way up the base 14, whereby the rear portion 48 may not be completely split in two. In yet other examples, the second opening 38 may extend at least partially up the rear wall 128.

The housing can be configured to have different dimensions in different embodiments. However, in an example embodiment, for an optical fibre (including its cladding) of the order of 0.10 mm to 1 mm diameter, for example 0.5 mm diameter, W1 may be of the order of 0.5 mm to 3 mm, for example 1.5 mm, W2 may be of the order of 5mm to 10 mm, for example 8 mm, W3 may be of the order of 15 mm to 20 mm, for example 18 mm and W4 may be of the order of 20 mm to 30 mm, for example 25 mm. The overall housing may be of the order of 15 mm to 25 mm high, for example 20 mm high and have a base dimensions of the order of 30 mm to 50 mm by 30 mm to 50 mm, for example 40 mm by 35mm.

An example of a method of mounting the housing for supporting the end of the elongate flexible member will be explained.

The elongate flexible member 56 can be terminated in advance with the connector 50 before the elongate flexible member is placed in the substrate 60 to facilitate the attachment of the connector and also the handling of the optical fibre when this is placed in the substrate. However, as an alternative, the elongate flexible member 56 could be terminated with the connector 50 after the elongate flexible member is placed in the substrate 60.

The housing 10 can be offered up to the exposed portion of the elongate flexible member 56 and the elongate flexible member can be slid though the slot 34 until the connector lines up with the first opening 34. The connector can then be secured to the front face 22 of the housing 10. In the present example this is done using screws that pass though holes (not shown) in the flange 52 of the optical connector and into threaded holes 36 in the front face 22 of the housing 10. As mentioned above, in other examples, other fixings methods can be used. For example, rather than providing threaded holes 36 in the housing 10, self tapping screws could be used. Alternatively, or in addition, other fastening or fixing arrangements could be used. For example, in an embodiment the connector could be bonded or glued in place.

The elongate flexible member that leaves the rear of the connector 50 can pass freely and without hindrance through the cavity 15 in the housing 10 and through the rear (the second) opening 38 into the substrate.

With the housing located on the surface of the substrate, one or more embedding layers 62 can then be added to the surface of the substrate 60 and can be arranged to cover at least part of the base 14 to embed the base of the housing 10. Due to the wide internal cavity 15 and the wide rear opening 38, the exact position of the housing is not critical, and lateral (side to side) and longitudinal (front to back can back to front) movement of the housing with respect to the entry and/or exit point of the elongate flexible member can occur during the mounting process.

The housing can then be secured in place by curing, hardening or otherwise fixing the embedding layers. At the same time or subsequently, the internal cavity can optionally be filled with, for example, a resin that can then be cured to fix the elongate flexible member in place.

Figure 6 illustrates a variation on the housing illustrated in Figure 4. In the example shown in Figure 6, rather than separate walls defining the front and rear surfaces, it can be seen that the housing is configured more as a block with solid portions 123 and 125 and with a smaller cavity 115. The cavity 115 may be narrower than the cavity 15 illustrated in Figure 5 but is still configured to have a width substantially greater than the width of the elongate flexible member and generally defines a 3-dimensional cavity in the same manner as in the example of Figure 4 in order to provide the flexibility in the positioning and mounting of the housing 10.

Figure 6 further illustrates an example embodiment where a different form of connector 51 that does not have a flange is used. In this particular example, the connector 51 is secured in place using glue or other bonding material 53. It will be appreciated that the connector 51 of Figure 6 could also be used with the housing of Figure 1 - 5, and that a connector 50 as shown in Figures 1 - 5 could be used with the housing of Figure 6. In addition, it will be appreciated that the housing 50 shown in Figures 1 - 5 could be bonded or glued in place rather than or in addition to being screwed in place. Indeed, any suitable fastening or mounting arrangement could be used according to the type of connector 50/51 that is employed, it being appreciated that the connectors 50 and 51 are merely representations of possible connectors.

In an example embodiment, the width of the second (the rear) opening can be greater than the height of the second opening. In an example embodiment the width of the second (the rear) opening is substantially greater than the width (e.g., the diameter) of the elongate flexible member, for example at least 1.5 (e.g., at least a plurality of times) the width of the elongate flexible member. In an example embodiment the width of the internal cavity is at least as wide or wider than the rear opening, that is substantially greater than the width (e.g., the diameter) of the elongate flexible member, for example at least 1.5 (e.g., at least at least a multiple of) the width of the elongate flexible member.

In an example embodiment, the body of the housing can be integral with the base for ease of manufacture, strength and cost. The housing can be manufactured of any suitable materials. Examples of suitable materials are a plastics material, a metal, and a ceramic material, a composite material, or any suitable combination of these and/or or other materials.

The housing can be formed in any suitable manner, for example by moulding (e.g., injection moulding of a plastics material), stamping from a sheet material (e.g., by stamping a sheet of metal), or by machining (e.g., from a block of material), or any suitable combination of these and/or or other methods.

Although in the described example, the elongate flexible member is a waveguide, more specifically a fibre optic cable, the housing could also be used to mount an electrical cable or a fluid hose or other flexible conduit, or indeed any other elongate flexible member.

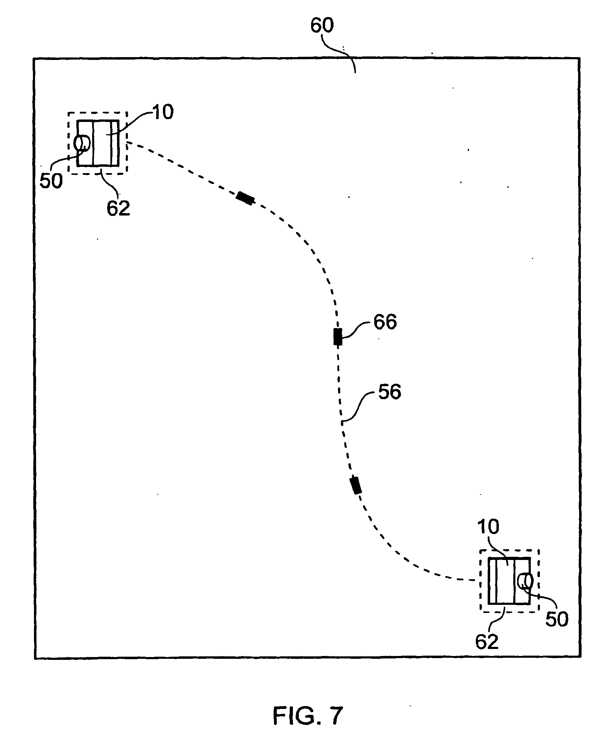

Figure 7 illustrates an example of a structure that includes two housings 10 as described above, a substrate 60 having a surface on which the housings is mounted and through which an optical fibre 56 extends. The optical fibre can be configured, for example, to provide strain gauges 66, for example as described in the applicant's European patent application 0725087.5, filed 24 January 2007. The housings can be mounted at each end of the optical fibre using one or more embedding layers that extend at least partially over the base 14 of the housing 10. A respective optical fibre connector 50 is attached to the optical fibre in each of the housings 10. This means that if a fault develops along the fibre, or in one of the housings, access can still be made to the strain gauges 66 by choosing an appropriate connector 50. In another example, a connector 50 and/or housing 10 may be provided at one end only of the optical fibre. As described above, in the final assembly, the cavity in the housing can be filled with resin or another filling material. The substrate can, for example, be formed of a composite material, for example a composite material laid down in layers. The substrate can, for example, form part of or the whole of an aircraft structure or other aerospace structure.

Accordingly, there has been described a surface egress and/or ingress housing for an elongate flexible member. A front opening in a front surface of the housing can receive a connector for the elongate flexible member. A base of the housing can be at least partially received under an embedding layer for mounting the housing on the surface. An internal cavity in the housing can communicate with the front opening and with a rear opening in the base. The rear opening and the cavity can be wider than the elongate flexible member to facilitate mounting of the housing.

There has also been described a structure that includes at least one housing as described herein, a substrate having a surface on which the housing is mounted, a connector for an elongate flexible member mounted to the housing and an elongate flexible member that is attached to the connector and passes through the housing and into the substrate.

A method of supporting an end of an elongate member that is embedded in a substrate includes passing the elongate flexible member though the first and second openings of a housing as described herein, locating the housing on the surface of the substrate, mounting a connector attached to the end of the elongate flexible member at the first opening, and at least partially embedding the base of the housing under an embedding layer, wherein the second opening and the internal cavity are wider than the elongate flexible member to enable at least lateral movement of the housing during the locating of the housing on the surface of the substrate and during the embedding of the base of the housing.

Although the embodiments above have been described in considerable detail, numerous variations and modifications will become apparent to those skilled in the art.

## Claims

1. A surface egress and/or ingress housing (10) for an elongate flexible member (56), the housing comprising a body (12) having a first surface (22) with a first opening (32) for receiving a connector (50,51) for the elongate flexible member (56), and a base (14) to be at least partially received under an embedding layer (62) for mounting the housing on the surface, the base including a second opening (38) that is wider than the elongate flexible member, the body further comprising an internal cavity (15) in communication with the first opening (32) and the second opening (38) and being wider than the elongate flexible member (56) wherein the body is integral with the base (14) and the first surface is formed with a slot (34) that extends from the bottom of the base (14) to the lower edge of the first opening (32), the slot (34) being operable to receive the elongate flexible member (56) during mounting of the housing on the surface of a substrate (60).

2. The housing of claim 1, wherein the width of the second opening is greater than the height of the second opening.

3. The housing of claim 1 or 2, wherein the width of the second opening is at least a multiple of the width of the elongate flexible member.

4. The housing of any preceding claim, wherein the internal cavity is wider than the second opening.

5. The housing of any preceding claim, wherein the body comprises a first wall forming the first surface that is adjacent to a second wall forming a second surface and a third wall forming a third surface, a fourth wall forming a fourth surface being adjacent to the second and third walls and a fifth wall that forms a fifth surface being adjacent each of the first, second third and fourth walls.

6. The housing of claim 5, wherein the base comprises a first portion adjacent the first surface, a second portion adjacent the second surface, a third portion adjacent the third surface, and a fourth portion adjacent the fourth surface.

7. The housing of any preceding claim, wherein the first surface comprises at least one formation for mounting a connector for the elongate flexible member.

8. The housing of claim 7, wherein the at least one formation comprises a threaded hole for receiving a screw.

9. The housing of any preceding claim, wherein the base forms a flange that extends at least partially around the body.

10. The housing of any preceding claim, comprising a plastics material.

11. The housing of any preceding claim, comprising metal.

12. The housing of any preceding claim, comprising a ceramic material.

13. The housing of any preceding claim, formed by moulding.

14. The housing of any preceding claim, formed by stamping.

15. The housing of any preceding claim, formed by machining.

16. The housing of any preceding claim, wherein the elongate flexible member is a waveguide.

17. The housing of any preceding claim, wherein the elongate flexible member is a fibre optic cable.

18. A structure comprising at least one housing according to any one of the preceding claims, a substrate having a surface on which the housing is mounted, a connector for an elongate flexible member mounted to the housing and an elongate flexible member that is attached to the connector and passes through the housing and into the substrate.

19. The structure of claim 18, wherein the housing is mounted on the surface of the substrate by means of an embedding layer that extends at least partially over the base of the housing.

20. The structure of claim 18 or claim 19, wherein the cavity in the housing is filled with resin.

21. The structure of any of claims 18 to 20, comprising a first housing according to any of claims 1 to 15 at a first end of the elongate flexible member and a second housing according to any of claims 1 to 15 at a second end of the elongate flexible member.

22. The structure of any of claims 18 to 21, wherein the elongate flexible member is a fibre optic cable.

23. The structure of any of claims 18 to 22, wherein the substrate is a composite material.

24. The structure of any of claims 18 to 23, wherein the substrate forms part of an aircraft structure.

25. A method of supporting an end of an elongate flexible member (56) that is embedded in a substrate (60) using a housing (10) according to any one of claims 1 to 17, the method comprising: receiving the elongate flexible member (56) in the slot (34) of the housing (10), passing the elongate flexible member through the first (32) and second openings (38) of the housing, locating the housing on the surface of the substrate (60), mounting a connector (50,51) attached to the end of the elongate flexible member at the first opening (32), and at least partially embedding the base of the housing under an embedding layer (62), wherein the second opening (38) and the internal cavity (15) are wider than the elongate flexible member (56) to enable at least lateral movement of the housing (10) during the locating of the housing on the surface of the substrate (60) and during the embedding of the base (14) of the housing.

## Patentansprüche

1. Ein Oberflächen-Ausgangs- und/oder Eingangsgehäuse (10) für ein längliches flexibles Element (56), das Gehäuse umfassend einen Körper (12) aufweisend eine erste Oberfläche (22) mit einer ersten Öffnung (32) zum Aufnehmen von einem Bindeglied (50, 51) für das längliche flexibel Element (56), und eine Basis (14), um zumindest teilweise unter einer einbettenden Lage (62) zum Anbringen des Gehäuses an der Oberfläche aufgenommen zu werden, die Basis beinhaltend eine zweite Öffnung (38), die breiter als das längliche flexible Element ist, der Körper weiter umfassend eine innere Höhlung (15) in Kommunikation mit der ersten Öffnung (32) und der zweiten Öffnung (38) und, die breiter als das längliche flexible Element (56) ist, wobei der Körper mit der Basis (14) einstückig ist und die erste Oberfläche mit einer Aussparung (34) gebildet ist, die sich vom Boden der Basis (14) zu der unteren Kante der ersten Öffnung (32) erstreckt, die Aussparung (34) ist dazu eingerichtet, das längliche flexible Element (56) während eines Anbringens des Gehäuses auf der Oberfläche eines Substrats (60) aufzunehmen.

2. Das Gehäuse nach Anspruch 1, wobei die Breite der zweiten Öffnung größer als die Höhe der zweiten Öffnung ist.

3. Das Gehäuse nach Anspruch 1 oder 2, wobei die Breite der zweiten Öffnung zumindest ein Mehrfaches der Breite des länglichen flexiblen Elements ist.

4. Das Gehäuse nach einem der vorhergehenden Ansprüche, wobei die innere Höhlung breiter als die zweite Öffnung ist.

5. Das Gehäuse nach einem der vorhergehenden Ansprüche, wobei der Körper umfasst: eine erste Wand, die eine erste Oberfläche bildet und an eine zweite Wand, die eine zweite Oberfläche bildet, sowie eine dritte Wand, die eine dritte Oberfläche bildet, angrenzt; eine vierte Wand, die eine vierte Oberfläche bildet und an die zweite und dritte Wand angrenzt; und eine fünfte Wand, die eine fünfte Oberfläche bildet, und an jede der ersten, zweiten, dritten und vierten Wand angrenzt.

6. Das Gehäuse nach Anspruch 5, wobei die Basis einen ersten Abschnitt benachbart zu der ersten Oberfläche, einen zweiten Abschnitt benachbart zu der zweiten Oberfläche, einen dritten Abschnitt benachbart zu der dritten Oberfläche, und einen vierten Abschnitt benachbart zu der vierten Oberfläche umfasst.

7. Das Gehäuse nach einem der vorhergehenden Ansprüche, wobei die erste Oberfläche zumindest ein Gebilde zum Anbringen eines Bindeglieds für das längliche flexible Element aufweist.

8. Das Gehäuse nach Anspruch 7, wobei das zumindest eine Gebilde ein Gewindeloch zum Aufnehmen einer Schraube umfasst.

9. Das Gehäuse nach einem der vorhergehenden Ansprüche, wobei die Basis einen Flansch bildet, der sich zumindest teilweise um den Körper herum erstreckt.

10. Das Gehäuse nach einem der vorhergehenden Ansprüche, umfassend ein Kunststoffmaterial.

11. Das Gehäuse nach einem der vorhergehenden Ansprüche, umfassend Metall.

12. Das Gehäuse nach einem der vorhergehenden Ansprüche, umfassend ein keramisches Material.

13. Das Gehäuse nach einem der vorhergehenden Ansprüche, gebildet durch Gießen.

14. Das Gehäuse nach einem der vorhergehenden Ansprüche, gebildet durch Pressen.

15. Das Gehäuse nach einem der vorhergehenden Ansprüche, gebildet durch maschinelles Bearbeiten.

16. Das Gehäuse nach einem der vorhergehenden Ansprüche, wobei das längliche flexible Element ein Wellenleiter ist.

17. Das Gehäuse nach einem der vorhergehenden Ansprüche, wobei das längliche flexible Element ein faseroptisches Kabel ist.

18. Eine Struktur, umfassend zumindest ein Gehäuse gemäß einem der vorhergehenden Ansprüche, ein Substrat, aufweisend eine Oberfläche, auf welcher das Gehäuse angebracht ist, ein Bindeglied für ein längliches flexibles Element, das an dem Gehäuse angebracht ist, und ein längliches flexibles Element, das an dem Bindeglied angeschlossen ist und durch das Gehäuse und in das Substrat führt.

19. Die Struktur nach Anspruch 18, wobei das Gehäuse auf der Oberfläche des Substrats mittels einer einbettenden Lage, die sich zumindest teilweise über die Basis des Gehäuses erstreckt, angebracht ist.

20. Die Struktur nach Anspruch 18 oder Anspruch 19, wobei die Höhlung des Gehäuses mit Harz gefüllt ist.

21. Die Struktur nach einem der Ansprüche 18 bis 20, umfassend ein erstes Gehäuse nach einem der Ansprüche 1 bis 15 an einem ersten Ende des länglichen flexiblen Elements und ein zweites Gehäuse nach einem der Ansprüche 1 bis 15 an einem zweiten Ende des länglichen flexiblen Elements.

22. Die Struktur nach einem der Ansprüche 18 bis 21, wobei das längliche flexible Element ein faseroptisches Kabel ist.

23. Die Struktur nach einem der Ansprüche 18 bis 22, wobei das Substrat ein Verbundmaterial ist.

24. Die Struktur nach einem der Ansprüche 18 bis 23, wobei das Substrat einen Teil einer Flugzeugstruktur bildet.

25. Ein Verfahren zum Unterstützen eines Endes eines länglichen flexiblen Elements (56), das in einem Substrat (60) eingebettet ist, verwendend ein Gehäuse (10) nach einem der Ansprüche 1 bis 17, das Verfahren umfassend: Aufnehmen des länglichen flexiblen Elements (56) in der Aussparung (34) des Gehäuses (10), Führen des länglichen flexiblen Elements durch die erste (32) und zweite Öffnung (38) des Gehäuses, Anordnen des Gehäuses auf der Oberfläche des Substrats (60), Anbringen des Bindeglieds (50, 51), das an dem Ende des länglichen flexiblen Elements angeschlossen ist, bei der ersten Öffnung (32), und zumindest teilweises Einbetten der Basis des Gehäuses unter einer einbettenden Lage, wobei die zweite Öffnung (38) und die innere Höhlung (15) breiter als das längliche flexible Element (56) sind, um zumindest eine seitliche Bewegung des Gehäuses (10) während des Anordnens des Gehäuses auf der Oberfläche des Substrats (60) und während des Einbettens der Basis (14) des Gehäuses zu ermöglichen.

## Revendications

1. Boîtier de sortie et/ou d'entrée de surface (10) pour un élément flexible allongé (56), le boîtier comprenant un corps (12) doté d'une première surface (22) avec une première ouverture (32) destinée à recevoir un connecteur (50, 51) pour l'élément flexible allongé (56), et une base (14) destinée à être reçue au moins partiellement sous une couche d'encastrement (62) pour le montage du boîtier sur la surface, la base contenant une deuxième ouverture (38) qui est plus large que l'élément flexible allongé, le corps comprenant en outre une cavité interne (15) communiquant avec la première ouverture (32) et la deuxième ouverture (38), et étant plus large que l'élément flexible allongé (56), dans lequel le corps est formé intégralement avec la base (14) et la première surface est formée avec une fente (34) qui s'étend du fond de la base (14) jusqu'à l'arête inférieure de la première ouverture (32), la fente (34) étant prête à recevoir l'élément flexible allongé (56) pendant le montage du boîtier sur la surface d'un substrat (60).

2. Boîtier selon la revendication 1, dans lequel la largeur de la deuxième ouverture est plus grande que la hauteur de la deuxième ouverture.

3. Boîtier selon la revendication 1 ou 2, dans lequel la largeur de la deuxième ouverture est au moins un multiple de la largeur de l'élément flexible allongé.

4. Boîtier selon l'une quelconque des revendications précédentes, dans lequel la cavité interne est plus large que la deuxième ouverture.

5. Boîtier selon l'une quelconque des revendications précédentes, dans lequel le corps comprend une première paroi formant la première surface qui est adjacente à une deuxième paroi formant une deuxième surface et une troisième paroi formant une troisième surface, une quatrième paroi formant une quatrième surface adjacente aux deuxième et troisième parois et une cinquième paroi formant une cinquième surface adjacente à chacune des première, deuxième, troisième et quatrième parois.

6. Boîtier selon la revendication 5, dans lequel la base comprend une première partie adjacente à la première surface, une deuxième partie adjacente à la deuxième surface, une troisième partie adjacente à la troisième surface et une quatrième partie adjacente à la quatrième surface.

7. Boîtier selon l'une quelconque des revendications précédentes, dans lequel la première surface comprend au moins une structure servant au montage d'un connecteur pour l'élément flexible allongé.

8. Boîtier selon la revendication 7, dans lequel au moins une structure comprend un trou taraudé pour la réception d'une vis.

9. Boîtier selon l'une quelconque des revendications précédentes, dans lequel la base forme une bride qui s'étend au moins partiellement autour du corps.

10. Boîtier selon l'une quelconque des revendications précédentes, comprenant un matériau plastique.

11. Boîtier selon l'une quelconque des revendications précédentes, comprenant du métal.

12. Boîtier selon l'une quelconque des revendications précédentes, comprenant un matériau céramique.

13. Boîtier selon l'une quelconque des revendications précédentes, formé par moulage.

14. Boîtier selon l'une quelconque des revendications précédentes, formé par estampage.

15. Boîtier selon l'une quelconque des revendications précédentes, formé par usinage.

16. Boîtier selon l'une quelconque des revendications précédentes, dans lequel l'élément flexible allongé est un guide d'ondes.

17. Boîtier selon l'une quelconque des revendications précédentes, dans lequel l'élément flexible allongé est un câble de fibre optique.

18. Structure comprenant au moins un boîtier selon l'une quelconque des revendications précédentes, un substrat doté d'une surface sur laquelle le boîtier est monté, un connecteur pour un élément flexible allongé monté sur le boîtier et un élément flexible allongé qui est fixé au connecteur et passe par le boîtier et dans le substrat.

19. Structure selon la revendication 18, dans laquelle le boîtier est monté sur la surface du substrat à l'aide d'une couche d'encastrement qui s'étend au moins partiellement sur la base du boîtier.

20. Structure selon la revendication 18 ou 19, dans laquelle la cavité dans le boîtier est remplie de résine.

21. Structure selon l'une quelconque des revendications 18 à 20, comprenant un premier boîtier selon l'une quelconque des revendications 1 à 15 sur une première extrémité de l'élément flexible allongé et un second boîtier selon l'une quelconque des revendications 1 à 15 sur une seconde extrémité de l'élément flexible allongé.

22. Structure selon l'une quelconque des revendications 18 à 21, dans laquelle l'élément flexible allongé est un câble de fibre optique.

23. Structure selon l'une quelconque des revendications 18 à 22, dans laquelle le substrat est un matériau composite.

24. Structure selon l'une quelconque des revendications 18 à 23, dans laquelle le substrat fait partie d'une structure d'aéronef.

25. Procédé de support d'une extrémité d'un élément flexible allongé (56) qui est encastré dans un substrat (60) en utilisant un boîtier (10) selon l'une quelconque des revendications 1 à 17, le procédé comprenant : la réception de l'élément flexible allongé (56) dans la fente (34) du boîtier (10), le passage de l'élément flexible allongé par les première (32) et deuxième ouvertures (38) du boîtier, le positionnement du boîtier sur la surface du substrat (60), le montage d'un connecteur (50, 51) fixé sur l'extrémité de l'élément flexible allongé sur la première ouverture (32) et l'encastrement au moins partiel de la base du boîtier sous une couche d'encastrement (62), dans lequel la deuxième ouverture (38) et la cavité interne (15) sont plus larges que l'élément flexible allongé (56) pour permettre au moins un mouvement latéral du boîtier (10) pendant le positionnement du boîtier sur la surface du substrat (60) et pendant l'encastrement de la base (14) du boîtier.
